**Europäisches Patentamt**

**European Patent Office**

**Office européen des brevets**

(19)

(11) Numéro de publication : **0 277 069 B1**

(12)

# FASCICULE DE BREVET EUROPEEN

(45) Date de publication du fascicule du brevet :
24.07.91 Bulletin 91/30

(51) Int. Cl.⁵ : **B60N 2/02,** F16H 1/16,
F16H 25/20

(21) Numéro de dépôt : 88400153.8

(22) Date de dépôt : 25.01.88

(54) Perfectionnements aux mécanismes de réglage de position à vis.

(30) Priorité : 27.01.87 FR 8700929

(43) Date de publication de la demande :
03.08.88 Bulletin 88/31

(45) Mention de la délivrance du brevet :
24.07.91 Bulletin 91/30

(84) Etats contractants désignés :
DE ES GB IT

(56) Documents cités :
DE-A- 2 627 645
DE-B- 1 118 341
FR-A- 2 408 935
FR-A- 2 449 354
NL-C- 31 583

(56) Documents cités :
US-A- 2 682 176
US-A- 2 851 137
US-A- 2 877 658
US-A- 3 848 477

(73) Titulaire : **BERTRAND FAURE AUTOMOBILE**
**5 Rue Auguste Brunot Rocquencourt**
**F-78150 Le Chesnay (FR)**

(72) Inventeur : **Pezier, Yves**
**8 Avenue de Paris**
**F-91150 Etampes (FR)**
Inventeur : **Auclerc, Didier**
**14 Rue du Petit Chemin**
**La Montagne F-91150 Etampes (FR)**

(74) Mandataire : *Behaghel, Pierre et al*
*CABINET PLASSERAUD 84 rue d'Amsterdam*
*F-75009 Paris (FR)*

## Description

L'invention est relative aux mécanismes à vis propres à transformer les commandes rotatives d'une vis en déplacements d'un organe de réglage de position.

Elle concerne plus particulièrement, parce que c'est dans leur cas que son application semble devoir offrir le plus d'intérêt, mais non exclusivement, ceux, de ces mécanismes, qui sont destinés à régler la position d'un siège de véhicule en avance longitudinale, en hauteur et/ou en inclinaison.

Dans les mécanismes considérés, la vis de commande coopère avec au moins un écrou ou vis tangente et, pour éviter la création de coincements ou celle d'un jeu excessif entre les dentures en prise, il est nécessaire que le montage pivotant de la vis sur l'ossature du mécanisme soit exécuté de façon telle que cette vis occupe une position définie avec exactitude aussi bien axialement que transversalement.

On a recours en général à cet effet à des paliers et butées qui doivent être montés eux-mêmes avec précision, ce qui est long et coûteux.

L'invention a pour but, surtout, de remédier à ces inconvénients en permettant un montage extrêmement simple de la vis en une position optimale.

A cet effet, les mécanismes à vis du genre en question comportent selon l'invention les caractéristiques définies dans la partie caractérisante de la revendication 1.

Dans des modes de réalisation préférés, on a recours en outre à l'une et/ou à l'autre des dispositions suivantes :

    – la seconde extrémité de la vis est terminée par un embout conique propre à coagir avec un alvéole conique complémentaire évidé dans l'ossature du mécanisme,

    – la vis comprend une portée de révolution propre à prendre appui contre une portée complémentaire de l'ossature du mécanisme dans le sens axial opposé à celui qui correspond à l'application de la première extrémité conique contre le pion fileté,

    – la vis est solidarisée avec une roue tangente propre à coagir avec une vis sans fin et cette vis sans fin est elle-même montée sur l'ossature du mécanisme de la manière exposée ci-dessus,

    – dans un mécanisme selon l'alinéa précédent appliqué à un réglage de position de siège de véhicule, la vis sans fin est accouplée à un moteur d'entraînement à deux sens de rotation facilement commandable par la personne assise sur le siège,

    – dans le cas où le mécanisme à vis équipe une glissière de réglage longitudinal de siège de véhicule comprenant deux profilés montés coulissants l'un sur l'autre, savoir un profilé supérieur solidarisable avec l'assise du siège et un profilé inférieur solidarisable avec le plancher du véhicule, la vis est montée longitudinalement sur l'un des profilés de la glissière, de préférence sur son profilé supérieur, et elle coagit avec un écrou solidarisé longitudinalement avec l'autre profilé.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La figure 1, de ce dessin, montre en coupe verticale axiale un mécanisme à vis adapté au réglage de la position longitudinale d'un siège de véhicule, mécanisme établi selon l'invention.

La figure 2 est une coupe transversale dudit mécanisme selon II-II, figure 1.

La figure 3 est une coupe transversale partielle du même mécanisme selon III-III, figure 1.

D'une façon connue en soi, le siège de véhicule dont on désire régler la position longitudinale, c'est-à-dire en avance ou recul, est monté sur au moins une glissière horizontale longitudinale comprenant un profilé inférieur 1 solidarisable avec le plancher du véhicule et un profilé supérieur 2 propre à supporter l'assise du siège et monté de façon à pouvoir glisser le long du profilé inférieur 1, par exemple en reposant sur des patins anti-friction 3 logés dans des rainures 4 de ce profilé.

Les réglages désirés de position longitudinale sont assurés en déplaçant le profilé supérieur le long du profilé inférieur.

Le mécanisme de réglage comprend à cet effet :

    – un écrou 5 d'axe parallèle à la direction longitudinale de la glissière et solidarisé longitudinalement avec le profilé inférieur 1, notamment par son logement dans une cage 7 prolongée vers le bas par deux pattes 6 serties sur ledit profilé inférieur 1, ce logement étant effectué de façon telle que l'écrou puisse flotter transversalement dans la cage, aussi bien verticalement qu'horizontalement, mais sans jeu axial ou longitudinal,

    – et une vis ou tige filetée 8 traversant l'écrou 5 et propre à coagir avec celui-ci, vis montée sur le profilé supérieur 2 de façon à être solidarisée axialement, mais non angulairement, avec ce dernier.

Au lieu d'avoir recours, pour ce montage de la vis, à des paliers cylindriques et à des butées axiales, comme dans les réalisations connues, ce qui exige le respect de tolérances très strictes en ce qui concerne la position transversale des paliers et la position axiale des butées, et conduit à des réalisations délicates et coûteuses, on monte selon l'invention une extrémité au moins de la vis sur le profilé de glissière concerné en donnant à cette extrémité une forme conique et en la faisant coopérer avec un support conique complémentaire de position axiale réglable par rapport audit profilé, ce qui assure à la fois très simplement non seulement le montage mécanique désiré, mais aussi un positionnement transversale et axial excellent de la vis.

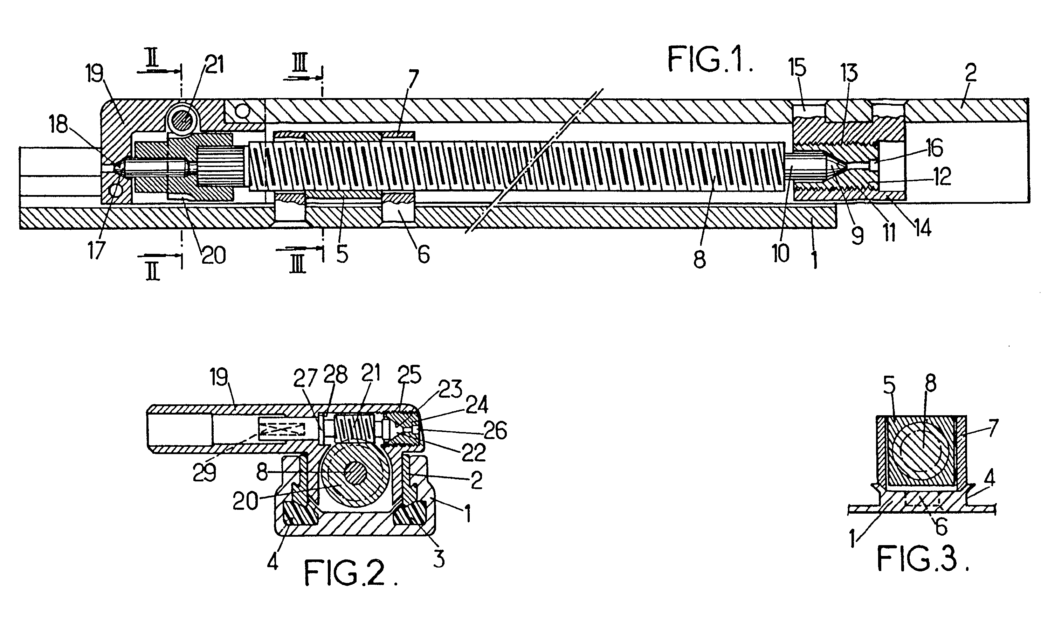

Dans le mode de réalisation illustré, l'extrémité de vis considérée, visible à droite sur la figure 1, est conformée selon un embout conique 9 prolongeant un tronçon cylindrique 10.

Cet embout 9 est logé dans un alvéole conique 11 lui-même évidé dans un pion fileté 12 propre à coagir par vissage avec l'alésage fileté complémentaire 13, d'axe longitudinal, d'un écrou 14.

Cet écrou 14 est fixé sur le profilé supérieur 2 par sertissage de pattes 15 prolongeant cet écrou vers le haut.

La position axiale ou longitudinale du pion fileté 12 par rapport à l'écrou 14 peut être réglée en faisant tourner ce pion à l'aide d'un tournevis coagissant avec une fente appropriée 16 évidée dans la face, dudit pion, la plus éloignée de la vis 8.

Ce montage de l'extrémité axiale de droite de la vis 8 sur le profilé supérieur 2 doit être complété par montage de son extrémité axiale de gauche sur le même profilé.

Ce dernier montage est ici assuré en donnant également à ladite extrémité de gauche la forme d'un embout conique 17 coopérant avec un alvéole conique 18 évidé dans la paroi d'un capot 19 solidaire du profilé 2.

La vis 18 est ainsi montée entre deux cônes qui assurent automatiquement son centrage transversal et son positionnement axial.

Ce montage est effectué par simple vissage du pion fileté 12.

Le vissage en question est exécuté sans forcer jusqu'à butée axiale des deux embouts coniques contre les fonds de leurs logements coniques respectifs.

Pour laisser à la vis une liberté de rotation suffisante en fin de montage, il peut être avantageux de dévisser légèrement le pion 12 après obtention du contact de butée.

Il est à noter que le positionnement axial obtenu de la vis s'accompagne automatiquement d'un excellent centrage transversal de cette vis : les tolérances requises pour les montages de la vis et de l'écrou sont donc ici beaucoup moins rigoureuses que dans les réalisations antérieurement connues.

Pour le mode de réalisation illustré, où la vis est montée entre deux cônes, la commande des rotations de cette vis ne peut être appliquée sur celle-ci en bout d'arbre.

Elle doit donc être appliquée sur une zone intermédiaire de cette vis.

A cet effet, la vis est ici solidarisée avec une toue tangente 20 propre à venir en prise avec une vis sans fin 21.

Cette vis sans fin 21 est montée, comme la vis 8, sur le profilé supérieur 2 par un montage à cône réglable.

A cet effet, elle comprend un embout conique 22 (figure 2) propre à coagir avec un alvéole complémentaire 23 évidé dans un pion fileté 24 lui-même vissé dans un alésage fileté complémentaire 25 du capot 19 et actionnable par introduction d'un tournevis dans une fente frontale 26.

Mais ici, à la différence de la vis 8, l'application axiale de la vis sans fin 21 dans le sens opposé à celui de l'application de l'embout conique 22 contre l'alvéole 23 est assurée au niveau d'une collerette 27 solidaire d'un portion intermédiaire de ladite vis sans fin 21 et propre à prendre appui contre un épaulement 28 aménagé dans le capot 19.

Cette réalisation permet de prévoir à l'extrémité, de la vis sans fin, opposée à son embout conique, un carré 29 facile à accoupler à un organe d'entraînement tel qu'un moteur électrique à deux sens de rotation facile à commander par la personne assise sur le siège.

Ici encore, le montage proposé assure automatiquement un excellent rendement pour l'engrènement entre la vis sans fin 21 et la roue tangente 20. On peut ajouter que c'est particulièrement le cas dans le présent mode de réalisation, pour lequel d'une part le cône 18 définissant l'axe de la roue tangente 20 et d'autre part les surfaces de guidage de la vis sans fin 21 viennent de moulage dans la même pièce (capot 19), ce qui écarte tout risque d'erreur sur l'entraxe entre cette roue et cette vis.

En suite de quoi, et quel que soit le mode de réalisation adopté, on dispose finalement d'un mécanisme de commande à vis dont la constitution, le fonctionnement et les avantages résultent suffisamment de ce qui précède.

Comme il va de soi, et comme il résulte d'ailleurs déjà de ce qui précède, l'invention ne se limite nullement à ceux de ses modes d'application et de réalisation qui ont été plus spécialement envisagés ; elle en embrasse, au contraire, toutes les variantes, notamment celles où le mécanisme de commande à vis considéré serait utilisé à d'autres fins qu'un réglage de la position longitudinale de siège de véhicule, et en particulier au réglage de la hauteur ou de l'inclinaison d'un tel siège.

**Revendications**

1. Mécanisme de réglage de position à vis, comprenant une vis (18, 21) montée sur une ossature (2) de façon à être liée axialement, mais non angulairement, à cette ossature et un écrou (5) ou roue tangente (20) propre à coagir avec la vis, caractérisé en ce que l'une au moins des deux extrémités de la vis est montée sur l'ossature (2) par l'intermédiaire d'un moyen assurant à la fois son positionnement transversal et axial, ledit moyen étant constitué par un embout conique (9, 22) réalisé à ladite extrémité et coopérant avec un alvéole conique complémentaire (11, 23) évidé dans un pion fileté (12, 24) lui-même propre à coagir par vissage avec un alésage fileté complémentaire (13, 25) compris par l'ossature (2) du mécanisme.

2. Mécanisme à vis selon la revendication 1, caractérisé en ce que la seconde extrémité de la vis (8) est terminée par un embout conique (17) propre à coagir avec un alvéole conique complémentaire (18) évidé dans l'ossature (19) du mécanisme.

3. Mécanisme à vis selon la revendication 1, caractérisé en ce que la vis (8) comprend une portée de révolution (27) propre à prendre appui contre une portée complémentaire (28) de l'ossature du mécanisme dans le sens axial opposé à celui qui correspond à l'application de la première extrémité conique (9) contre le pion fileté (12).

4. Mécanisme à vis selon l'une quelconque des précédentes revendications, caractérisé en ce que la vis (8) est solidarisée avec une roue tangente (20) propre à coagir avec une vis sans fin (21) et en ce que cette vis sans fin (21) est elle-même montée sur l'ossature (2) du mécanisme de la manière exposée ci-dessus.

5. Mécanisme à vis selon la revendication 4, appliqué à un réglage de position de siège de véhicule, caractérisé en ce que la vis sans fin (21) est accouplée à un moteur d'entraînement à deux sens de rotation facilement commandable par la personne assise sur le siège.

6. Mécanisme à vis selon l'une quelconque des précédentes revendications, équipant une glissière de réglage longitudinal de siège de véhicule qui comprend deux profilés montés coulissants l'un sur l'autre, savoir un profilé supérieur (2) solidarisable avec l'assise du siège et un profilé inférieur (1) solidarisable avec le plancher du véhicule, caractérisé en ce que la vis (8) est montée longitudinalement sur l'un des profilés (2) de la glissière et en ce qu'elle coagit avec un écrou (5) solidarisé longitudinalement avec l'autre profilé (1).

7. Mécanisme à vis selon la revendication 6, caractérisé en ce que l'écrou (5) est monté de façon à pouvoir flotter transversalement, sans jeu axial, dans une cage (7) solidaire dudit autre profilé (1).

8. Mécanisme à vis selon l'une quelconque des revendications 6 et 7, caractérisé en ce que le profilé sur lequel est montée la vis (8) est le profilé supérieur (2) de la glissière.

**Patentansprüche**

1. Schraubvorrichtung zum Lageverstellen, die aus einer Schraube (8, 21), die an einem Gestell (2) so befestigt ist, daß sie daran axial aber nicht winklig gehalten ist, und einer Mutter (5) oder einem Stirnrad (20) besteht, die mit der Schraube zusammenwirkt, dadurch gekennzeichnet, daß wenigstens eins der beiden Enden der Schraube an dem Gestell (2) durch Einfügen eines Mittels befestigt ist, das gleichzeitig ihre Lage in Querrichtung und in axialer Richtung sicherstellt und aus einem konischen Endstück (9, 22) besteht, das an diesem Ende vorgesehen ist, wobei das Endstück mit einer entsprechend ausgebildeten konischen Ausnehmung (11, 23) eines Gewindezapfens (12, 24) zusammenwirkt, der seinerseits in eine entsprechende Gewindebohrung (13, 25) des Gestells (2) der Vorrichtung einschraubbar ist.

2. Schraubvorrichtung nach Anspruch 1, dadurch gekennzeichnet, daß an dem zweiten Ende der Schraube (8) ein konisches Endstück (17) vorgesehen ist, das mit einer entsprechend ausgebildeten konischen Ausnehmung (18) in dem Gestell (19) der Vorrichtung zusammenwirkt.

3. Schraubvorrichtung nach Anspruch 1, dadurch gekennzeichnet, daß die Schraube (8) ein Umdrehungslager (27) enthält, das sich an einem entsprechend ausgebildeten Lager (28) des Gestells in axialer Richtung entgegengesetzt der Richtung abstützt, in der das erste konische Endstück (9) gegen den Gewindezapfen (12) anliegt.

4. Schraubvorrichtung nach einem der vorhergehenden Ansprüche, dadurch gekennzeichnet, daß die Schraube (8) mit einem Kegelrad (20) verbunden ist, das mit einer Schnecke (21) zusammenwirkt, und daß die Schnecke in gleicher Weise an dem Gestell (2) der Vorrichtung befestigt ist, wie vorstehend dargelegt wurde.

5. Schraubvorrichtung nach Anspruch 4 zur Regulierung der Stellung eines Fahrzeugsitzes, dadurch gekennzeichnet, daß die Schnecke (21) mit einem in zwei Richtungen rotierenden Antriebsmotor verbunden ist, der von einer auf dem Sitz befindlichen Person in einfacher Weise betätigbar ist.

6. Schraubvorrichtung nach einem der vorhergehenden Ansprüche mit einer Gleitschiene zum Einstellen des Fahrzeugsitzes in Längsrichtung, die aus zwei Profilen besteht, die aufeinander verschiebbar sind, nämlich einem oberen Profil (2), das an dem Sitz des Fahrzeuges befestigt ist, und einem unteren Profil (1), das an dem Boden des Fahrzeuges anbringbar ist, dadurch gekennzeichnet, daß die Schraube (8) in Längsrichtung an einem der Profile (2) der Gleitschiene befestigt ist und mit einer Mutter (5) zusammenwirkt, die in Längsrichtung mit dem anderen Profil (1) verbunden ist.

7. Schraubvorrichtung nach Anspruch 6, dadurch gekennzeichnet, daß die Mutter (5) so befestigt ist, daß sie ohne axiales Spiel in Querrichtung lose in einem Käfig (7) sitzt, der mit dem anderen Profil (1) verbunden ist.

8. Schraubvorrichtung nach einem der Ansprüche 6 und 7, dadurch gekennzeichnet, daß das Profil, an dem die Schraube (8) befestigt ist, das obere Profil (2) der Gleitschiene ist.

## Claims

1. Position adjustment screw mechanism comprising a screw (18, 21) mounted on a framework (2) so as to be linked axially, but not angularly, to this framework and a nut (5) or tangent wheel (20) adapted for coacting with the screw, characterized in that one at least of the two ends of the screw is mounted on the frame (2) through a means which simultaneously position it transversally and axially, said means being made of a tapered end-piece (9, 22) formed at said end and coacting with a complementary tapered recess (11, 23) hollowed in a threaded pin (12, 24) itself adapted for cooperating by screwing with a complementary threaded bore (13, 25) comprised by the framework (2) of the mechanism.

2. Screw mechanism according to claim 1, characterized in that the second end of the screw (8) ends in a tapered end-piece (17) adapted for coacting with a complementary tapered recess (18) hollowed in the framework (19) of the mechanism.

3. Screw mechanism according to claim 1, characterized in that the screw (8) comprises a surface of revolution (27) adapted for bearing against a complementary surface (28) of the framework of the mechanism in the axial direction opposite that which corresponds to the application of the first tapered end (9) against the threaded pin (12).

4. Screw mechanism according to anyone of the preceding claims, characterized in that the screw (8) is integral with a tangent wheel (20) adapted for coacting with an endless screw (21) and in that this endless screw (21) is itself mounted on the framework (2) of the mechanism in the above outlined way.

5. Screw mechanism according to claim 4, applied to the adjustment of the position of a vehicle seat, characterized in that the endless screw (21) is coupled to a drive motor with two directions of rotation readily controllable by the person sitting in the seat.

6. Screw mechanism according to anyone of the preceding claims, equipping a slide for the longitudinal adjustment of a vehicle seat comprising two extruded sections mounted for sliding one on the other, namely an upper section (2) connectable to the sitting portion of the seat and a lower section (1) connectable to the floor of the vehicle, characterized in that the screw (8) is mounted longitudinally on one of the sections (2) of the slide, and coacts with a nut (5) fixed longitudinally to the other section (1).

7. Screw mechanism according to claim 6, characterized in that the nut (5) is mounted so as to be able to float transversally, without axial play, in a cage (7) fixed to said other section (1).

8. Screw mechanism according to anyone of the preceding claims, characterized in that the section on which the screw (8) is mounted is the upper section (2) of the slide.

FIG.1.

FIG.2.

FIG.3.

EP 0 277 069 B1